# EUROPÄISCHE PATENTANMELDUNG

(11) **EP 1 826 426 A2**
(43) Veröffentlichungstag der Anmeldung: **29.08.2007**
(21) Anmeldenummer: 07100413.9
(22) Anmeldetag: 11.01.2007
(51) Int. Cl.: F16C 33/14

(54) **Vorrichtung zur Herstellung eines Lagersitzes**

(30) Priorität: 28.02.2006 DE 102006009572
(71) Anmelder: CLAAS Fertigungstechnik GmbH, 48362 Beelen (DE)
(72) Erfinder: Rau, Marco, 33442 Herzebrock-Clarholz (DE)

(57) **Zusammenfassung**

Die Erfindung betrifft eine Vorrichtung zur Herstellung eines von einem Durchzug (3) gebildeten Lagersitzes für eine Welle, einen Bolzen oder dergleichen mit einem Verformungswerkzeug (8), wobei das Verformungswerkxeug (8) einen konusförmigen Verformungsbereich (14) aufweist und der konusförmige Verformungsbereich (14) von aufeinanderfolgenden Radiatrilien (15, 16, 17, 18) gebildet wird, so dass die Maßgenauigkeit des Durchzugs (3) und dessen Oberflächengüte verbessert wird.

## Beschreibung

Die Erfindung betrifft eine Vorrichtung zur Herstellung eines von einem Durchzug gebildeten Lagersitzes für eine Welle, einen Bolzen, ein Lager oder dergleichen mit einem Verformungswerkzeug nach dem Oberbegriff des Anspruchs 1.

Aus der DE 198 33 763 ist ein Verfahren und eine Vorrichtung zur Herstellung eines von einem Durchzug gebildeten Lagers offenbart. Eine Öffnung in einem Blech, die beispielsweise in das Bauteil eingestanzt wurde, wird mit einem dornartigen Werkzeug aufgeweitet und dabei das die Öffnung umgebende Blechmaterial zu einem kragenförmigen Durchzug geformt, wobei unter dem Blech ein Gegenhalter angeordnet ist. Oberhalb des sich in Pressrichtung verjungenden Abschnitts des Werkzeugs weist das Werkzeug einen zylindrischen Abschnitt auf, dessen Auf1endurchmesser annähernd dem gewünschten Innendurchmesser des Durchzuges entspricht und mit dem der Durchzug abrupt auf seinen endgültigen Innendurchmesser aufgeweitet wird,

Nachteilig bei der bekannten Vorrichtung ist, dass der erzielte tnnendurchmesser des Durchzugs oft außerhalb eines akzeptablen Toleranzbereiches liegt und die Oberfläche der inneren Mantelfläche des Durchzugs sehr rau ist, so dass die Durchzüge als Gleitlager ungeeignet sind oder die geforderte Maßtoleranz zur Aufnahme eines Wälzlagers nicht einhalten, zudem führt die abrupte Aufweitung in Abhängigkeit von der Elastizität des zu verformender, Bauteils bei spröden Ma.terialeigenschaften zur Rissbildung,

Der Erfindung liegt daher die Aufgabe zugrunde, die Nachteile des Standes der Technik zu vermeiden und ein Verformungswerkzeug vorzuschlagen, mit dem die Maßgenauigkeit der Durchzüge und deren Oberflächengüte verbessert wird,

Diese Aufgabe wird erfindungsgemäß durch die kennzeichnenden Merkmale des Anspruchs 1 gelöst Weitere vorteilhafte Wirkungen des Erfindungsgegenstandes ergeben sich aus den Unteransprüchen.

Dadurch, dass das Verformungswerkzeug einen konusförmigen Verforniungsberesch aufweist und der konusförmige Verformungsbereich von aufeinanderfolgenden Radialrillen gebildet wird, wird die Bohrung durch die Radialrillen schrittweise zu dem Durchzug verformt sowie der Durchzug durch die Radialrillen auf den fertigen InnendurcrHnesser ausgewalkt. Die so hergestellten Durchzüge weisen eine erhöhte Maßgenauigkeit und eine verbesserte Oberflachengüte auf.

In vorteilhafter Ausgestaltung der Erfindung nimmt der Durchmesser der Radialrillen vom Konuskopf des Verformungswerkzeuges zum Konusfuß des Veliormungswerkzeuges hin zu, so dass die Verformung des Bauteils allmählich erfolge was die Neigung zur Rissbildung vermindert oder gänzlich ausschließt und damit zu einer glatten Oberfläche führt.

Indem zumindest der Durchmesser der Radialrille im Konsfuß den Innendurchmesser des ausgeformten Durchzuges bestimmt, ist der gewünschte Innendurchmesser des Durchzugs durch die Auswahl eines entsprechenden Verformungswerkzeugs festlegbar.

In weiterer vorteilhafter Ausgestaltung der Erfindung durchdringt das Verformungswerkzeug das Bauteil in der Weise, dass dem Bauteil durch schrittweises Aufweiten des Bauteils ein Durchzug angeformt wird, so dass die Bildung von Rissen oder Einfallstellen in der Mantelfläche des Durchzuges reduziert wird.

Vorteilhafterweise ist das Bauteil zwischen einem Niederhalter und einer Matrize fixiert, wobei das Verformungswerkzeus vom Niederhalter in Richtung Matrize durch die in das Bauteil eingebrachte Bohrung geführt wird, so dass sich das Umformwerkzeug sich bei seiner Aufwärtsbewegung zwanglos von dem Bauteil löst

in einer vorteilhaften Ausgestaltung der Erfindung wird die Anzahl der Radialrillen von der Elastizität des zu verformenden Bauteiles bestimmt, so dass das Umformwerkzeug in Abhängigkeit vom Material und der Blechdicke des Bauteils wählbar ist. Auf diese Weise wird sichergestellt, dass das Verformungswerkzeug an die Materialeigenschaften des zu verformenden Bauteils anpassbar ist,

Dadurch, dass die Anzahl der Radialrillen umso größer ist, je unelastischer das zu verformende Bauteil ist, werden die Teilumformgrade so klein ausgeführt, dass eine Rissbildung bei der Umformung des Bauteils ausgeschlossen werden kann.

Weitere vorteilhafte Ausgestaltungen sind Gegenstand weiterer Unteransprüche und werden nachfolgend an Hand eines in mehreren Figuren dargestellten Ausführungsbeispiels näher erläutert

Es zeigen:
- Fig. 1: eine perspektivische Ansicht eines ebenen unverformten Bauteils mit einer Bohrung,
- Fig. 2: das Bauteil gemäß Fig.1, nach der Aufweitung der Bohrung zu einem Durchzug,
- Fig.3: eine schematische Seitenansicht der erfindungsgemäßen Vorrichtung zur Herstellung eines Durchzuges an einem Bauteil.

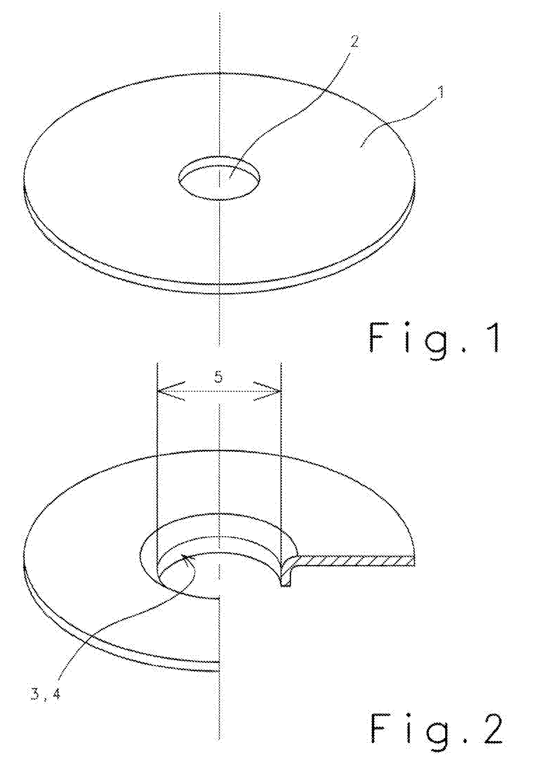

Fig. 1 zeigt ein ebenes aus Blech hergestelltes Bauteil 1, dass mit einer kreisrunden Bohrung 2 versehen ist. Die Bohrung 2 ist beispielsweise herausgestanzt oder gelasert worden. Fig.2 zeigt das Bauteil aus Fig.1 nachdem die Bohrung 1 zu einem Durchzug 3 aufgewertet wurde. Der Durchzug 3 weist eine innere Mantelfläche 4 mit einem Innendurchmesser 5 auf, die beispielweise als Gleitlagerfläche oder zur Aufnahme eines Wälzlagers dient. Es liegt im Rahmen der Erfindung, dass das Bauteil 1 aus jedem plastisch verformbaren Material hergestellt werden kann ist.

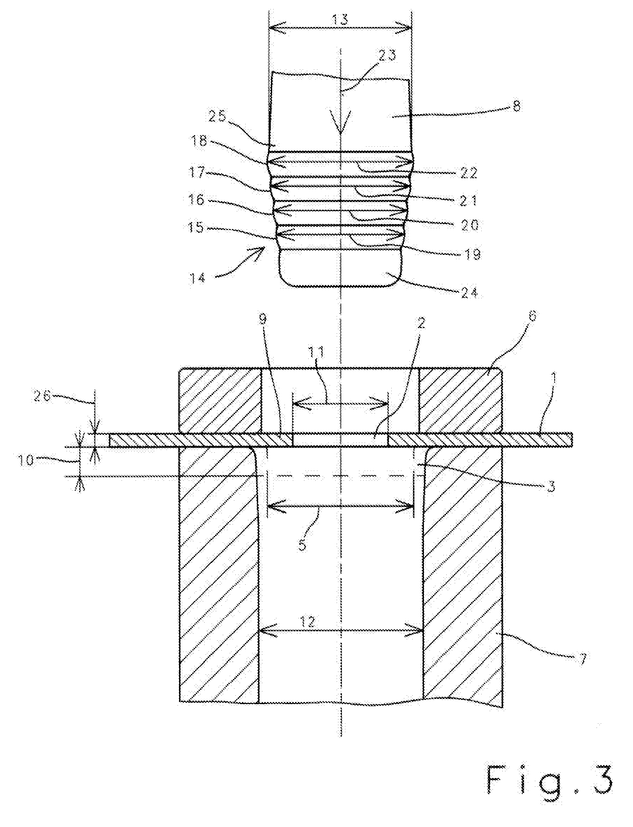

Fig.3 zeigt eine schematische Seitenansicht der erfirdtingsgemäßen Vorrichtung zur Herstellung des Durchzugs 3 an dem Bauteil 1
Das mit einer Bohrung 2 versehene Bauteil 1 wird mit einem Niederhalter 6 auf einer Matrize 7 fixiert. Oberhalb des Niederhalters 6 ist ein Verformungswerkzeug 8 koaxial zur Bohrung 2 des Bauteils 1 angeordnet, das auf an sich bekannte und daher hier nicht naher erläuterte Weise an einem sich auf- und ab bewegenden Werkzeughalter (nicht dargestellt) fixiert ist. Das Verformungswerkzeug 8 wird gemäß Pfeilrichtung 23 durch das Bauteil bewegt, wobei das Verformungswerkzeug 8 das Bauteil 1 vom Niederhalter 6 in Richtung Matrize 7 durchsetzt. Das Verformungswerkzeug 8 formt beim Durchdringen der Bohrung 2 den diese umgebenden Randbereich 9 zu einem kragenförmigen Durchzug 3 (gestrichelt dargestellt) um. Die Kragenhöhe 10 des fertigen Durchzugs 3 ist dabei im wesentlichen abhängig von dem Durchmesser 11 der Bohrung 2 im Bauteil 1, dem Innendurchmesser 12 der Matrize 7 und dem größten Außendurchmesser 13 des Verformungswerkzeuges 8.
Um die Maßgenauigkeit des Innendurchmessers 5 zu erhöhen und Materialbrüche zu vermeiden, weist das Verformungswerkzeug 8 erfindungsgemäß einen konusförmigen Verformungsbereich 14 auf, der von aufeinanderfolgenden Radialrillen 15, 16, 17, 18 gebildet wird. Der Durchmesser 19, 20, 21, 22 der Radialrillen 15, 16, 17, 18, nimmt vom Konuskopf 24 bis zum Konusfuß 25 hin zu, wobei der Durchmesser 22 der Radialrille 18 im Konusfuß 25 den Innendurchmesser 5 des ausgeformten Durchzuges 3 bestimmt, so dass die Bohrung 2 schrittweise zu dem Durchzug 3 mit dem endgültigen innendurchmesser 5 aufgeweitet wird. Die Anzahl der Radialrillen 15, 16, 17, 18 im Verformungsbereich 14 des Verformungswerkzeugs 8 wird durch die Elastizität des zu verformenden Bauteils 1 bestimmt. Je unelastischer das umzuformende Bauteil 1 ist, desto höher ist die Anzahl der Radialrilllen 15. 16, 17, 18 des ausgewählten Verformungswerkzeuges 8 mit dem das Bauteil 1 verformt wird. Die Anzahl der Radianten 15, 16, 17, 18 ist weiterhin abhängig der gewünschten Maßgenauigkeit und Oberflächengüte des Durchzuges 3, von dem Umformgrad des Bauteils 1, das heißt der Kragenhöhe 10 des Durchzuges 3 und der Blechdicke 26 des ebenen Bauteils 1 und der Festigkeit des Materials des Bauteils 1. Je höher die Anzahl der Radialrillen 15, 16, 17, 18 gewählt wird, desto geringer ist die beim Umformen freiwerdende thermische Energie. Das erfindungsgemäße Verformungswerkzeug 8 gewährleistet auch bei unterschiedlichen Blechdicken 26 der umzuformenden Bauteile 1. die innerhalb eines fertigungsbedingten Toleranzbereiches liegen, eine Einhaltung eines geforderten Innendurchmessers 5 auf ganzer Kragenhöhe 10 des Durchzuges 3 und damit einer innerhalb eines Toleranzbereiches liegenden Passung der Mantelfläche 4, die als Gleitlagersitz für eine Welle oder zur Aufnahme eines Wälzlagers geeignet ist. Das umgeformte Bauteil 1 wird mittels des erfindungsgemäßen Verformungswerkzeugs 8 so umgeformt, dass es nach dem Umformen an keiner Stelle eine Mindestmaterialstärke unterschreitet, damit es eine ausreichende Tragfähigkeit beziehungsweise Stabilität aufweist.

Es liegt im Rahmen des Könnens eines Fachmannes das beschriebene Ausführungsbeispiel in nicht dargestellter Weise abzuwandeln, um die beschriebenen Effekte zu erzeilen, ohne dabei den Rahmen der Erfindung zu verlassen. So kann das Verformungswerkzeug 8 und der damit hergestellte Durchzug 3 jeden beliebigen Querschnitt aufweisen,

### Bezugszeichenliste:

- 1: Bauteil
- 2: Bohrung
- 3: Durchzug
- 4: Mantelfläche
- 5: Innendurchmesser
- 6: Niederhalter
- 7: Matrize
- 8: Verformungswerkzeug
- 9: Randbereich
- 10: Kragenhöhe
- 11: Durchmesser
- 12: Innendurchmesser
- 13: Außendurchmesser
- 14: Verformungsbereich
- 15: Radialrille
- 16: Radialrille
- 17: Radialrille
- 18: Radialrille
- 19: Durchmesser
- 20: Durchmesser
- 21: Durchmesser
- 22: Durchmesser
- 23: Pfeilrichtung
- 24: Konuskopf
- 25: Konusfuß
- 26: Blechdicke

## Patentansprüche

1. Vorrichtung zur Herstellung eines von einem Durchzug (3) gebildeten Lagersitzes für eine Welle, einen Bolzen, ein Lager oder dergleichen mit einem Verformungswerkzeug (8),
**dadurch gekennzeichnet,**
**dass** das Verformungswerkzeug (8) einen konusförmigen Verformungsbereich (14) aufweist und der konusförmige Verformungsbereich (14) von aufeinanderfolgenden Radialrillen (15, 16, 17, 18) gebildet wird,

2. Vorrichtung nach Anspruch 1,
**dadurch gekennzeichnet,**
**dass** der Durchmesser (19, 20, 21, 22) der Radialrillen (15, 16, 18) vom Konuskopf (24) des Verformungswerkzeuges (8) zum Konusfuß (25) des Verformungswerkzeuges (8) hin zunimmt.

3. Vorrichtung nach wenigstens einem der vorhergehenden Ansprüche,
**dadurch gekennzeichnet,**
**dass** zumindest der Durchmesser (22) der Radialrille (18) im Konusfuß (25) den Innendurchmesser (5) des ausgeformten Durchzuges (3) bestimmt.

4. Vorrichtung nach wenigstens einem der vorhergehenden Ansprüche,
**dadurch gekennzeichnet,**
**dass** das Verformungswerkzeug ein Bauteil (1) in der Weise durchdringt, dass dem Bauteil (1) durch schrittweises Aufweiten des Bauteils (1) ein Durchzug (3) angeformt wird.

5. Vorrichtung nach wenigstens einem der vorhergehenden Ansprüche,
**dadurch gekennzeichnet**
**dass** das Bauteil (1) zwischen zumindest einem Niederhalter (6) und einer Matritze (7) fixiert ist und wobei das Verformungswerkzeug (8) vom Niederhalter (6) in Richtung Matrize (7) durch die in das Bauteil (1) eingebrachte Bohrung (2) geführt wird.

6. Vorrichtung nach wenigstens einem der vorhergehenden Ansprüche,
**dadurch gekennzeichnet,**
**dass** die Anzahl der Radialrillen (15, 16, 17, 18) des Verformungswerkzeuges (8) von der Elastizität des zu verformenden Bauteils (1) bestimmt wird.

7. Vorrichtung nach wenigstens einem der vorhergehenden Ansprüche,
**dadurch gekennzeichnet,**
**dass** die Anzahl der Radialrillen (15, 16, 17, 18) des Verformungswerkzeuges (8) umso größer ist, je unelastischer das zu verformende Bauteil (1) ist.

8. Lagersitz eines Bauteil (1) hergestellt mit einem Verformungswerkzeug (8) nach einem der vorhergehenden Ansprüche.
